# EUROPEAN PATENT APPLICATION

(11) **EP 4 462 006 A1**
(43) Date of publication of application: **13.11.2024**
(21) Application number: 22918822.2
(22) Date of filing: 21.12.2022
(51) Int. Cl.: F16L 55/00, B01D 27/10, B01D 35/14, B01D 46/00, F16L 21/00, F16L 29/02, F16L 55/24

(54) **CONTAINER CONNECTION SYSTEM AND FLUID CONTAINER**

(30) Priority: 06.01.2022 JP 2022000813
(71) Applicant: Roki Techno Co., Ltd., Tokyo 140-8576 (JP)
(72) Inventor: NAKAMURA, Yoshinori, Tokyo 140-8576 (JP)
(74) Representative: Grünecker Patent- und Rechtsanwälte PartG mbB
(86) International application number: PCT/JP2022/047090
(87) International publication number: WO 2023/132238

(57) **Abstract**

A container capable of connecting a container and a container holder to open and close a valve in a simple structure is required. A container connection system comprises a fluid container wherein a fluid flows in an inner portion of the fluid container, the fluid container including a container connection having an inner conduit through which the fluid flows and in communication with the inner portion of the fluid container; and an outer conduit through which the fluid flows and in communication with the inner portion of the fluid container, the outer conduit formed outside the inner conduit and defined by an outer surface of the inner conduit and an inner surface of the outer conduit; and a container holder for receiving the container connection to connect with the fluid container, the container holder having a conduit capable of connecting with the inner conduit of the fluid container and another conduit capable of connecting with the outer conduit of the fluid container when the container holder receives the container connection.

## Description

### Technical Field

The present invention relates to a container connection system. More particularly, the present invention relates to a container connection system for a container having a filter material.

### Background Art

In a container connection system in which fluid containers are detachably connected, a check valve is arranged to close the conduit of the fluid container. In these parts, when the fluid container is attached in use, the pressure on the primary side (upstream side) is increased, and the diaphragm moves in the flow direction to create a gap to stimulate the flow of fluid. In addition, when the fluid container is removed, the pressure on the primary side (upstream side) is decreased, and the diaphragm closes the flow of fluid. For this reason, in general, the check valve must be a pressure-resistant member, and metal parts such as springs or diaphragms are used.

### Summary of Invention

### Technical Problem

However, since the check valve in the conventional container connection system opens and closes depending on the pressure of the fluid on the primary side (upstream side), the check valve closes when the pressure of the fluid on the primary side (upstream side) is lowered, regardless of the user operation of removing the fluid container. Therefore, the fluid remains inside the fluid container, and the fluid remains inside when the fluid container is removed. In addition, since metal parts are used, there is a problem that sparks easily occur due to friction between the fluid to be filtered and particles during filtration, which may cause ignition.

Therefore, it is required, a valve element to close the conduit in response to the action of removing the fluid container without operating by the pressure of the fluid on the primary side (upstream side), and a container connection system in which the fluid container is detachably connected at the same time.

### Solution to Problem

An aspect of the present invention is a container connection system comprising a fluid container wherein a fluid flows in an inner portion of the fluid container, the fluid container including a container connection having an inner conduit through which the fluid flows and in communication with the inner portion of the fluid container; and an outer conduit through which the fluid flows and in communication with the inner portion of the fluid container, the outer conduit formed outside the inner conduit and defined by an outer surface of the inner conduit and an inner surface of the outer conduit; and a container holder for receiving the container connection to connect with the fluid container, the container holder having a conduit capable of connecting with the inner conduit of the fluid container and another conduit capable of connecting with the outer conduit of the fluid container when the container holder receives the container connection, wherein the fluid container including a connecting valve having a first engaging portion and a second engaging portion, the connecting valve being stored in the fluid container, wherein the container connection system comprising a guide portion to cause a movement of the connecting valve between a first position where the first engaging portion is engaged to the fluid container to close the outer conduit when the fluid container and the container holder are spaced apart from each other; and a second position where the second engaging portion and the container holder performs an engagement to fix the fluid container to the container holder and fluidly connect the conduit of the container holder to the inner conduit, and the another conduit of the container holder and the outer conduit are fluidly connected when the container holder receives the container connecting portion.

Another aspect of the present invention is a fluid container wherein a fluid flows in an inner portion of the fluid container, comprising a container connection having an inner conduit through which the fluid flows and in communication with the inner portion of the fluid container; and an outer conduit through which the fluid flows and in communication with the inner portion of the fluid container, the outer conduit formed outside the inner conduit and defined by an outer surface of the inner conduit and an inner surface of the outer conduit, the fluid container being connectable to a container holder, wherein the container holder includes a conduit capable of connecting with the inner conduit of the fluid container and another conduit capable of connecting with the outer conduit of the fluid container when the container holder receives the container connection and connects with the fluid container, wherein the fluid container includes a connecting valve having a first engaging portion and a second engaging portion, the connecting valve being stored in the fluid container, wherein the connecting valve comprises a guide portion to cause a movement of the connecting valve between a first position where the first engaging portion is engaged to the fluid container to close the outer conduit when the fluid container and the container holder are spaced apart from each other; and a second position where the second engaging portion and the container holder performs an engagement to fix the fluid container to the container holder and fluidly connect the conduit of the container holder to the inner conduit, and the another conduit of the container holder and the outer conduit are fluidly connected when the container holder receives the container connecting portion.

### Advantageous Effects of Invention

According to the present invention, it is provided, a simple structure to connect a container to a container holder and open/close a valve.

### Brief Description of Drawings

FIG.1 is a cross-sectional view of a container connection system according to an embodiment of the present invention.
FIG.2 is a cross-sectional view showing an example of a connecting valve of a container connection system according to an embodiment of the present invention.
FIG.3A is a cross-sectional view showing a state in which a fluid container is separated from a container holder in a container connection system according to an embodiment of the present invention.
FIG.3B is a cross-sectional view showing a state just before a fluid container is connected to a container holder in a container connection system according to an embodiment of the present invention.
FIG.3C is a cross-sectional view showing a state in which a fluid container is connected to a container holder in a container connection system according to an embodiment of the present invention.
FIG.4 is a cross-sectional view showing another example of a second engaging portion of a connecting valve of a container connection system according to an embodiment of the present invention.
FIG.5A is a cross-sectional view showing a state in which a fluid container is separated from a container holder in a container connection system according to another embodiment of the present invention.
FIG.5B is a cross-sectional view showing a state in which a fluid container is connected to a container holder in a container connection system according to another embodiment of the present invention.
FIG.5C is a cross-sectional view showing another embodiment of a connecting valve in a container connection system according to the present invention.

### Description of Embodiments

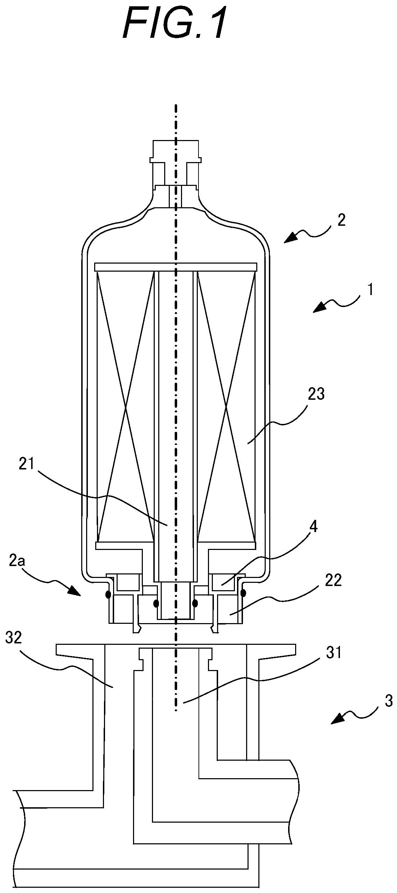

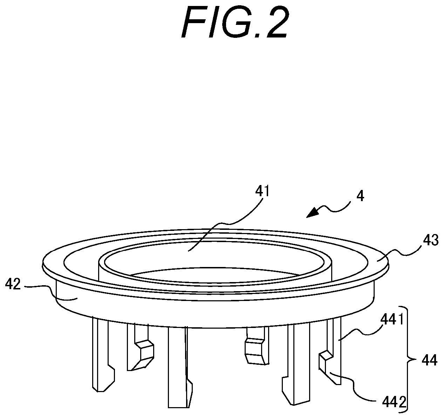

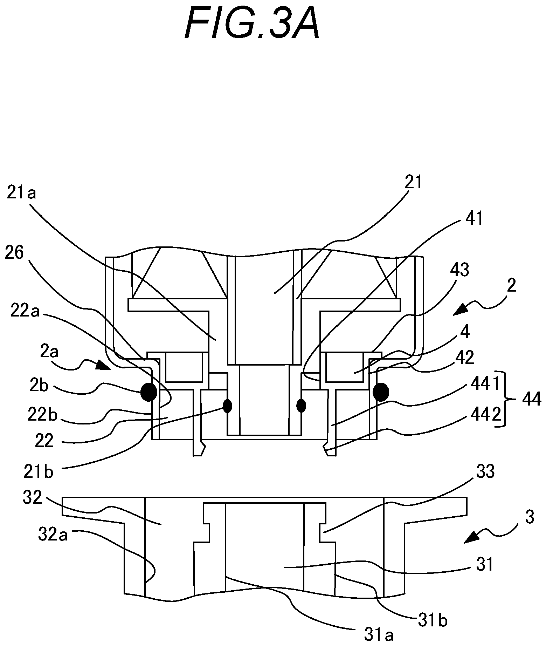

With reference to FIGS.1, 2 and 3A, a container connection system 1 according to an embodiment of the present invention will be described. FIG.1 shows a cross-sectional view of a container connection system 1. FIG.2 shows an example of a connecting valve 4 which is one of the components of the container connection system 1. The container connection system 1 includes a fluid container 2, a container holder 3, and a connecting valve 4. FIG.3A is an enlarged view of the connecting portion between the fluid container 2 and the container holder 3 of the container connection system 1. The fluid container 2 is used to be removably connected to the container holder 3, and the container connection system 1 contributes to the connection. The direction in which the fluid container 2 is removably connected to the container holder 3 is defined as the connection direction. Hereinafter, the "connection direction" means the direction in which the fluid container 2 is removably connected to the container holder 3, and the axis of the direction is defined as the "connection axis."

The fluid container 2 is typically a container having a cavity in an elongated shape in the direction of the connection axis. The fluid container 2 is generally symmetrical about the connection axis, and is cylindrical in a representative example. A flow path structure is formed in the fluid container 2 so that fluid flows from upstream to downstream. The fluid container 2 has an inner conduit 21 and an outer conduit 22 through which fluid flows. Both the inner conduit 21 and the outer conduit 22 communicate with the flow path structure in the fluid container 2 to form a flow path. Either of the inner conduit 21 and the outer conduit 22 can be arranged upstream. That is, they form a flow path that flows from the inner conduit 21 through the inside of the container to the outer conduit 22, or conversely from the outer conduit 22 through the inside of the container to the inner conduit 21. The outer conduit 22 is formed outside the inner conduit 21, and the inner conduit 21 and the outer conduit 22 form a double conduit. That is, the inner conduit 21 is a closed region whose cross section is defined by the conduit wall of the inner conduit 21. The outer conduit 22 is defined by an outer surface 21a of the conduit wall of the inner conduit 21and an inner surface 22a of the outer conduit 22. The inner conduit 21 and the outer conduit 22 form a container connection 2a formed at one end of the fluid container 2. For example, the container connection 2a can be defined such that the outer surface 22b of the outer conduit 22 forms an outer surface of the container connection 2a. A sealing material 2b, such as an O-ring, is attached to the outer surface 22b of the outer conduit 22, which is the outer surface of the container connection 2a.

The fluid container 2 can be a container generally used for a fluid system in which a fluid flows and used by detaching. In particular, a filter member 23 for filtering impurities and the like contained in the fluid can be stored in a channel structure in which the fluid flows in the fluid container 2. In this case, the fluid container 2 functions as a filter container.

The container holder 3 has a structure for receiving the container connecting portion 2a, and is connected to the fluid container 2 when receiving the container connecting portion 2a. The container holder 3 has a conduit 31 connectable to the inner conduit 21 of the fluid container 2 and a conduit 32 connectable to the outer conduit 22 of the fluid container 2. With the container connecting portion 2a connected to the container holder 3, the inner conduit 21 and the conduit 31 form a fluid connection in a state sealed from the outside, and the outer conduit 22 and the conduit 32 form a fluid connection in a state sealed from the outside. One of the conduit 31 and the conduit 32 is connected to a fluid source of fluid, and the other is connected to a discharge destination of fluid. In a state where a fluid container 2 and a container holder 3 are connected, a flow path is formed such that fluid flows from a conduit 31 to the inside of the container via an inner conduit 21 and flows out to a conduit 32 via an outer conduit 22, or fluid flows from a conduit 32 to the inside of the container via an outer conduit 22 and flows out to a conduit 31 via an inner conduit 21.

The fluid container 2 has a connecting valve 4 therein. The body of the connecting valve 4 has an inner circumferential shape in the form of a hole or a notch in the central portion around the connection axis, and a surface along the circumference of the hole or a surface along the edge of the notch is defined as an inner sliding surface 41. The outer shape of the body of the connecting valve 4 has an outer circumferential shape, and a surface along the circumference thereof is defined as an outer sliding surface 42. The inner sliding 41 surface 41 has a shape corresponding to the cross section of the outer conduit 22 of the fluid container 2 perpendicular to the connection axis direction, and is freely movable so as to slide in the connection axis direction in close contact with the outer surface 21a of the inner conduit 21 of the fluid container 2. The cross section of the outer sliding surface 42 is a cross section of the outer circumferential surface of the connecting valve 4 perpendicular to the connection axis direction, has a shape corresponding to the cross section of the inner surface 22a of the outer conduit 22 of the fluid container 2 perpendicular to the connection axis direction, and can be moved so as to slide in the connection axis direction in close contact with the inner surface 22a of the outer conduit 22 of the fluid container 2.

Typically, the container connecting portion 2a is arranged to extend in the connecting direction from the fluid container 2, and the inner conduit 21 and the outer conduit 22are also arranged to extend in the connecting direction from the fluid container 2. Typically, when the fluid container 2 is connected, the connecting direction is set to be downward in the vertical direction. That is, when the fluid container 2 is connected to the container holder 3, the container connecting portion 2a is arranged to extend downward from the fluid container 2.

At this time, the connecting valve 4 is positioned inside the container connecting portion 2a at any position on the outer surface 21a of the inner conduit 21 in a state of being closely fitted to the outer surface 21a of the inner conduit 21 of the fluid container 2. Since the inner sliding surface 41 of the connecting valve 4 is closely fitted to the outer surface 21a of the inner conduit 21, the connecting valve 4 is movable along the outer surface 21a of the inner conduit 21, but does not move in a state where there is no external force. In a state where the container connecting portion 2a of the fluid container 2 is separated from the container holder 3, the connecting valve 4 is typically lowered to the lowest position in the vertical direction as the connecting direction. The shape of the main body of the connecting valve 4 in a plane perpendicular to the connecting axis has a shape corresponding to the shape of the outer conduit 22 of the fluid container 2. Therefore, in this position, as will be described later, the inner sliding surface 41 of the connecting valve 4 is closely fitted to the outer surface 21a of the inner conduit 21 of the fluid container 2, and the outer sliding surface 42 of the connecting valve 4 is closely fitted to the inner surface 22a of the outer conduit 22 of the fluid container 2, so that the main body of the connecting valve 4 can close the outer conduit 22 of the fluid container 2 and block the flow of fluid.

The connecting valve 4 has a first engaging portion 43 and a second engaging portion 44. The fluid container 2 has a seat 26 as a step on the inner surface 22a of the outer conduit 22 so as to extend from the inner surface 22a in the direction toward the connection shaft in the direction perpendicular to the connection shaft. The first engaging portion 43 abuts on the seat 26 to lock the connecting valve 4 so as not to fall out of the fluid container 2 and to hold the connecting valve 4. The first engaging portion 43 can be, for example, a tab arranged so as to extend from the outer peripheral shape of the connecting valve 4 in the direction perpendicular to the connection shaft.

The second engaging portion 44 may comprise at least one flexible arm 441 extending from the main body of the connecting valve 4 in the direction of the connection axis, and a protrusion 442 disposed on the flexible arm 441. The flexible arm 441 can be flexibly deformed in the direction perpendicular to the connection axis by the elasticity of the material, and the position of the protrusion 442 can be moved in the direction perpendicular to the connection axis by the deformation of the flexible arm 441. The protrusion 442 has a chevron shape protruding from the surface of the flexible arm 441 in the direction perpendicular to the connection axis, and has a slope portion having a reduced height protruding from the most protruding portion in the direction of the connection axis.

The container holder 3 has a groove that is a recess 33. Since the recess 33 is engaged with the protrusion 442 of the second engaging portion 44 of the connecting valve 4 when the fluid container 2 is connected to the container holder 3, the recess is arranged at a position where the protrusion 442 of the second engaging portion 44 is positioned when the fluid container 2 is connected to the container holder 3. For example, as shown in FIGS.1 and 3A to 3C, the recess 33 can be arranged on the outer surface 31b of the conduit 31 after the protrusion 442 of the second engaging portion 44 is oriented in the direction of the center of the connection direction. Alternatively, the second engaging portion 44 can be arranged on the inner surface 32a of the conduit 32 in a reverse state in which the direction of the protrusion 442 is set to the outer direction opposite to the center direction of the connection direction (not shown).

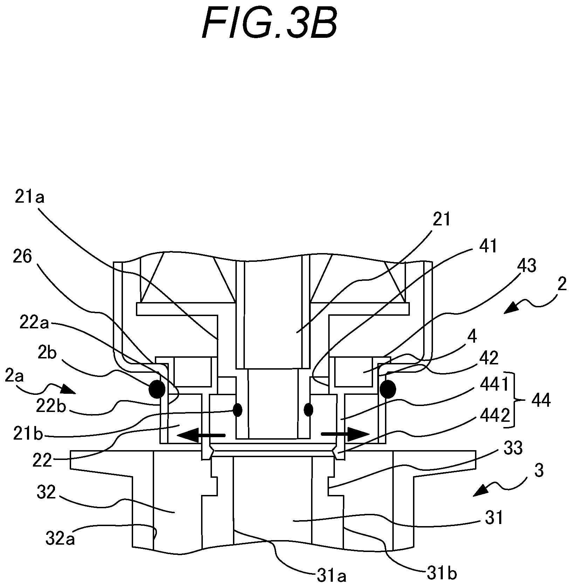

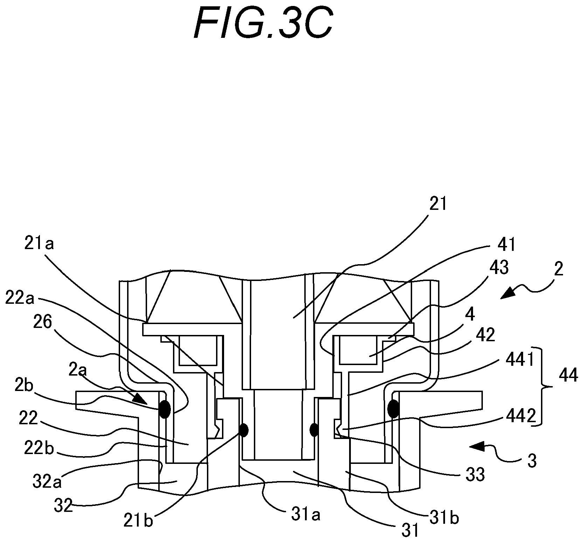

Next, with reference to FIGS.1 and 3A to 3C, how the container connection system 1 functions in the above-described structure and how the fluid container 2 is connected to the container holder 3 will be described. In the container connection system 1, when the fluid container 2 is separated from the container holder 3 (FIG.1, FIG.3A), the container connecting portion 2a of the fluid container 2 is inserted into the container holder 3 in the connecting direction. FIG.3A shows the container connection system 1 when the fluid container 2 is separated from the container holder 3. FIG.3B shows the container connection system 1 immediately before the fluid container 2 is connected to the container holder 3. FIG.3C shows the container connection system 1 when the fluid container 2 is connected to the container holder 3. When the fluid container 2 is connected to the container holder 3, the container connecting portion 2a is in the downward direction and the connecting axis of the fluid container 2 is in the vertical direction. This state will be described below.

In a state in which the fluid container 2 is separated from the container holder 3, that is, in a state in which the fluid container 2 is handled independently, the connecting valve 4 is in a state in which it is lowered most downward in the vertical direction, which is the connection direction. In this state, the first engaging portion 43 of the connecting valve 4 is engaged to the seat 26 on the inner surface 22a of the outer conduit 22 of the fluid container 2, and the main body of the connecting valve 4 closes the outer conduit 22 (first position; FIG.3A). In this state, the flexible arm 441 of the second engaging portion 44 extends in the connection direction. In this state, the inside of the fluid container 2 is isolated from the exterior by the connecting valve 4.

Subsequently, the container connecting portion 2a of the fluid container 2 is inserted into the container holder 3. In a state immediately before the fluid container 2 connected to the container holder 3 is connected to the container holder 3, the flexible arm 441 of the second engaging portion 44 contacts the container holder 3 (FIG.3B). The contact position is not particularly limited as long as it is an arbitrary position of the container holder 3, but typically it can be set to contact the conduit 32 connected to the inner conduit 21 of the fluid container 2. From this state, the container connecting portion 2a is further inserted into the container holder 3. As the container connecting portion 2a is inserted into the container holder 3, the connecting valve 4 is pushed up by the container holder 3, the inner sliding surface 41 of the connecting valve 4 is moved to slide along the outer surface 21a of the inner conduit 21, and the outer sliding surface 42 of the connecting valve 4 is moved to slide along the inner surface 22a of the outer conduit 22, thereby causing the connecting valve 4 to rise relative to the outer conduit 22. During this movement, the flexible arm 441 expands in the direction perpendicular to the connecting direction (the radial direction of the container holder 3: the direction of arrow X) by elastic force, and the conduit 31 of the container holder 3 enters the flexible arm 441.

When the container holder 3 completely receives the container connecting portion 2a of the fluid container 2, the fluid container 2 and the container holder 3 are connected and the fluid container 2 is fixed to the container holder 3 (second position; FIG.3C). In this position, the protrusion 442 of the flexible arm 441 of the second engaging portion 44 reaches the recess 33 of the container holder 3, and the protrusion 442 of the flexible arm 441 and the recess 33 of the container holder 3 are engaged and fitted. In this position, the connecting valve 4 is fixed upward relative to the inner conduit 21 along the connecting direction, and the outer conduit 22 is opened. In this state, the inner conduit 21 of the fluid container 2 and the conduit 31 of the container holder 3 are fluidly connected, and the outer conduit 22 of the fluid container 2 and the conduit 32 of the container holder 3 are fluidly connected.

Thus, the connecting valve 4 can move between the first position and the second position according to the state in which the fluid container 2 is connected to the container holder 3. In the second position, the sealing member 2b of the outer conduit 22, which is the container connecting portion 2a of the fluid container 2, contacts and seals the inner surface of the conduit 32 of the container holder 3 so that the fluid does not leak. At the same time, the inner conduit 21 of the container connecting portion 2a of the fluid container 2 is inserted into the container holder 3, and the sealing member 21b of the inner conduit 21 contacts and seals the inner surface 31a of the conduit 31 of the container holder 3 so that the fluid does not leak.

When the fluid container 2 is removed from the container holder 3, the container connecting portion 2a of the fluid container 2 is removed from the container holder 3 in the connecting direction in the reverse of the procedure for connecting the fluid container 2 to the container holder 3. At this time, the container connecting portion 2a of the fluid container 2 also performs the reverse of the procedure for connecting the fluid container 2 to the container holder 3. That is, when the fluid container 2 is moved so as to remove the container connecting portion 2a from the container holder 3 in the connecting direction, since the protrusion 442 of the flexible arm 441 is engaged with the recess 33 of the container holder 3, the flexible arm 441 prevents the connecting valve 4 from moving with respect to the container holder 3, but the fluid container 2 is separated from the container holder 3. Therefore, the connecting valve 4 relatively moves from the second position toward the first position with respect to the fluid container 2 in the fluid container 2. When the connecting valve 4 is moved to the first position in the fluid container 2, the protrusion 442 of the flexible arm 441 receives an external force from the fluid container 2 along the connecting direction so as to be released from the recess 33 of the container holder 3. By this external force, the protrusion 442 of the flexible arm 441 moves in the direction in which the protrusion 442 is released from the recess 33 by the slope of the protrusion 442 of the flexible arm 441. In response to this, the flexible arm 441 deforms by the elastic force so as to move away from the recess 33 in the direction perpendicular to the connecting direction (in the radial direction of the container holder 3: the direction of arrow X), and the protrusion 442 of the flexible arm 441 completely disengages from the recess 33. When the protrusion 442 of the flexible arm 441 completely disengages from the recess 33, the flexible arm 441 returns to the lower position in the direction perpendicular to the connecting direction (in the radial direction of the container holder 3: the direction of arrow X) by the elastic force. When the container connecting portion 2a of the fluid container 2 is removed from the container holder 3 in the connecting direction, the fluid container 2 is separated from the container holder 3, and the connecting valve 4 returns to the first position, and in this state, the inner sliding surface 41 of the connecting valve 4 is in close contact with the outer surface 21a of the inner conduit 21 of the fluid container 2, and the outer sliding surface 42 of the connecting valve 4 is in close contact with the inner surface 22a of the outer conduit 22 of the fluid container 2, so that the main body of the connecting valve 4 can close the outer conduit 22 of the fluid container 2and isolate the flow of fluid. That is, the outer surface 21a of the inner conduit 21and the inner surface 22a of the outer conduit 22 of the fluid container 2 function as a guide portion for moving the connecting valve 4 between the first and second positions along the connection axis. As the guide portion, it is not always necessary for both the outer surface 21a of the inner conduit 21 and the inner surface 22a of the outer conduit 22 of the fluid container 2 to slide the connecting valve 4 in the direction of the connection axis. At least one of the outer surface 21a of the inner conduit 21and the inner surface 22a of the outer conduit 22 of the fluid container 2 can be configured to slide the connecting valve 4 in the direction of the connection axis. For example, only the inner sliding surface 41 of the connecting valve 4 can be partially configured to move along the outer surface 21a of the inner conduit 21 of the fluid container 2, and then the inner sliding surface 41 of the connecting valve 4 moves along the outer surface 21a of the inner conduit 21 of the fluid container 2 and the outer sliding surface 42 of the connecting valve 4 moves along the inner surface 22a of the outer conduit 22 of the fluid container 2. Such a configuration is also included as a function of the guide portion.

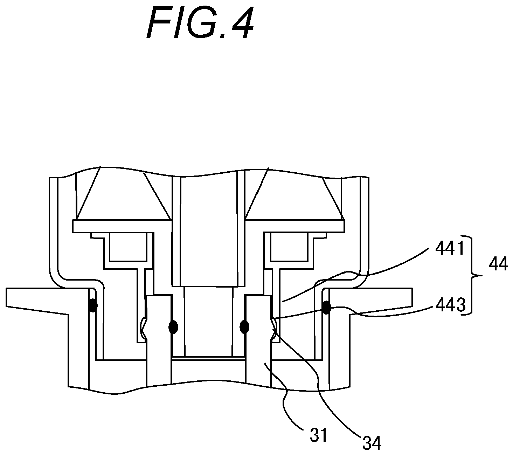

The foregoing example corresponds to the example shown in FIGS.1 to 3C, but on the contrary, as shown in FIG.4, the protrusion 442 of the second engaging portion 44 can be formed as a recess or a hole as the recess 443, and the recess 33 of the container holder 3 can be formed as a protrusion 34. Since the protrusion 34 is engaged with the recess 443 of the second engaging portion 44 of the connecting valve 4 when the fluid container 2 is connected to the container holder 3, the recess 443 of the second engaging portion 44 is arranged at a position when the fluid container 2 is connected to the container holder 3. Even in this case, the recess 443 may have a recess recessed from the surface of the flexible arm 441 in the vertical direction of the connection axis, and can be provided with a slope portion such that the depth of the recess protruding from the deepest recess along the direction of the connection axis is reduced.

As described above, an exemplary embodiment has an inner sliding surface 41 of the connecting valve 4 and an outer sliding surface 42 of the connecting valve 4 as guide portions for moving the connecting valve 4 along the connection axis between the first position and the second position, wherein the connecting valve 4 is movable such that the inner sliding surface 41 of the connecting valve 4 is in close contact with the outer surface 21a of the inner conduit 21 of the fluid container 2 and the outer sliding surface 42 of the connecting valve 4 is in close contact with the inner surface 22a of the outer conduit 22 of the fluid container 2, and wherein the body of the connecting valve 4 closes the outer conduit 22 of the fluid container 2 to isolate the flow of fluid.

However, the guide portion is not limited to the inner sliding surface 41 of the connecting valve 4 and the outer sliding surface 42 of the connecting valve 4. The guide portion can have various configurations as long as it causes the connecting valve to move between the first position and the second position.

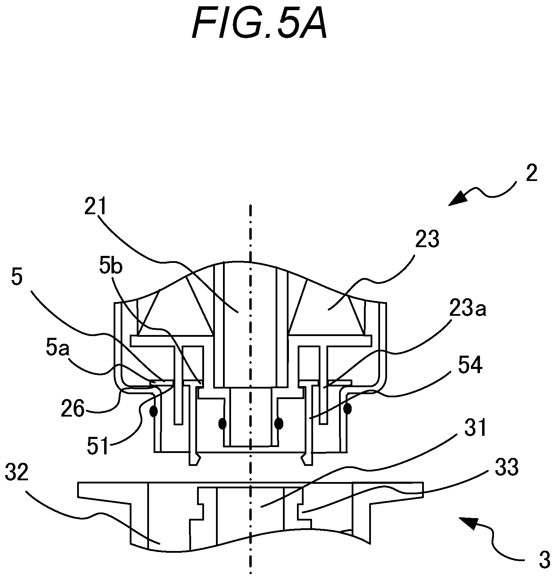

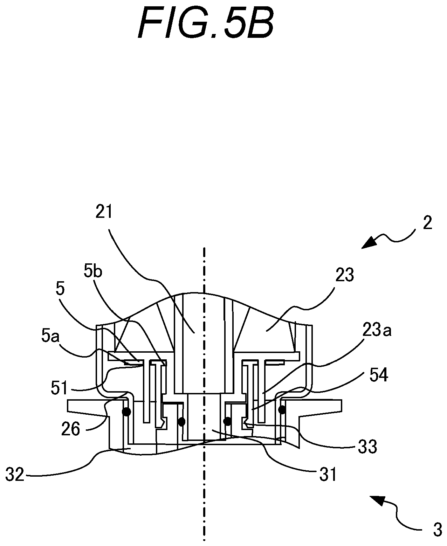

For example, as another embodiment, the guide portion can be an extension member 23a extending in the direction along the inner conduit, that is, in the direction of the connection axis. The connecting valve 4 described so far can be modified to form a connecting valve 5 engageable with the extension member 23a. For example, as shown in FIGS.5A and 5B, the connecting valve 5 has a hole 51, and the connecting valve 5 is arranged so that the extension member 23a penetrates the hole 51. A seal member (not shown) for increasing the degree of adhesion can be arranged in either of the extension member 23a and the hole 51. Thus, the connecting valve 5 can move along the extension member 23a in the direction of the connection axis. The engagement between the connecting valve 5 and the extension member 23a is not limited to the formation of the hole 51 in the connecting valve 5, but also includes a mode in which a notch (not shown) is arranged in the connecting valve 5, and the notch (not shown) in the connecting valve 5 is engaged with the extension member 23a so as to be movable between the first position and the second position along the direction of the connection axis. The structure other than the guide portion is the same as that described above, and will be omitted here.

FIG.5A shows the fluid container 2 and the container holder 3 spaced apart in this embodiment, with the connecting valve 5 in a first position to close the outer conduit 22. FIG.5B shows the fluid container 2 being received by the container holder 3, with the second engaging portion 54 of the connecting valve 5 in a second position to be engaged with the recess 33 of the container holder 3. The second engaging portion 54 of the connecting valve 5 functions in the same manner as the second engaging portion 44 of the connecting valve 4 described above.

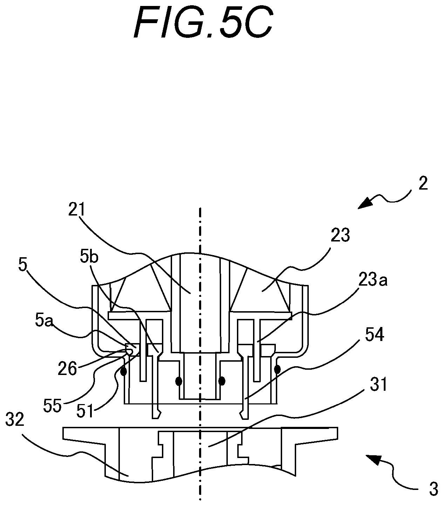

Further, as shown in FIG.5C, the connecting valve 5 may have an inclined surface 26a narrowing along the direction of the connection axis from the first position toward the second position with respect to the seat 26 of the fluid container 2 at the first position for closing the outer conduit 22. Further, the tab of the connecting valve 5 can be configured as a complementary inclined surface having a contact surface 55 in contact with the inclined surface 26a of the seat when the container holder 3 receives the container connection 2a. A sealing member (not shown) for increasing the degree of adhesion can be arranged between the inclined surface 26a and the contact surface 55. Thus, the connecting valve 5 can close the outer conduit 22 at the first position for closing the outer conduit 22.

This application claims the priority on Japanese patent application No. 2022-000813 filed on January 6, 2022, and the contents of the application is recited as a part of this application.

### Reference Signs List

1 container connection system
2 fluid container
21 inner conduit
22 outer conduit
23 Filter
3 Container holder
31 conduit
32 conduit (Other conduit)
33 recess (Groove)
34 protrusion
4, 5 connecting valve
41 inner sliding surface
42 outer sliding surface
43 first engaging portion (Tab)
44, 54 second engaging portion
441 flexible arm
442 protrusion
443 recess

## Claims

1. A container connection system comprising:
a fluid container wherein a fluid flows in an inner portion of the fluid container, the fluid container including a container connection having an inner conduit through which the fluid flows and in communication with the inner portion of the fluid container; and an outer conduit through which the fluid flows and in communication with the inner portion of the fluid container, the outer conduit formed outside the inner conduit and defined by an outer surface of the inner conduit and an inner surface of the outer conduit; and
a container holder for receiving the container connection to connect with the fluid container, the container holder having a conduit capable of connecting with the inner conduit of the fluid container and another conduit capable of connecting with the outer conduit of the fluid container when the container holder receives the container connection,
wherein the fluid container including a connecting valve having a first engaging portion and a second engaging portion, the connecting valve being stored in the fluid container,
wherein the container connection system comprising a guide portion to cause a movement of the connecting valve between a first position where the first engaging portion is engaged to the fluid container to close the outer conduit when the fluid container and the container holder are spaced apart from each other; and a second position where the second engaging portion and the container holder performs an engagement to fix the fluid container to the container holder and fluidly connect the conduit of the container holder to the inner conduit, and the another conduit of the container holder and the outer conduit are fluidly connected when the container holder receives the container connecting portion.

2. A container connection system according to claim 1, wherein the second engaging portion is a flexible arm having a protrusion and the container holder has a recess in the container holder; or the second engaging portion is a flexible arm having a recess and the container holder has a protrusion in the container holder,
wherein the engagement between the second engaging portion and the container holder is engagement between the protrusion and the recess.

3. An container connection system according to claim 1 or 2, wherein the first engaging portion is a tab disposed on the connecting valve, the fluid container includes a seat for holding the tab, and the first engaging portion is engaged with the first engaging portion by the fluid container by holding the tab onto the seat.

4. A container connection system according to claim 3, wherein the seat has a slope narrowing along a direction from the first position to the second position,
wherein the tab has a contact surface that contacts the slope when the container holder receives the container connection portion.

5. A container connection system of any one of claims 1 to 4, wherein the connecting valve comprises an inner sliding surface,
wherein the guide portion is the outer surface of the inner conduit,
wherein the inner sliding surface of the connecting valve slides along the outer surface of the inner conduit so that the connecting valve performs the movement.

6. A container connection system of claim 5, wherein the connecting valve further comprises an outer sliding surface;
wherein the movement is caused by sliding of the outer surface sliding along the inner surface of the outer conduit.

7. A container connection system of any one of claims 1 to 4, wherein the guide portion is an extension member extending along the inner conduit,
wherein the connecting valve engages the extension member,
wherein the connecting valve performs the movement along the extension member.

8. A container connection system according to any one of claims 1 to 7, wherein the movement between the first position and the second position is caused by the second engaging portion and the container holder;
wherein the movement between the first position and the second position is caused by the second engaging portion and the container holder.

9. A container connection system according to any one of claims 1 to 8,
wherein the fluid container includes a filter material for filtering the fluid within the fluid container, wherein the fluid container is a filter container.

10. A fluid container wherein a fluid flows in an inner portion of the fluid container, comprising:
a container connection having an inner conduit through which the fluid flows and in communication with the inner portion of the fluid container; and an outer conduit through which the fluid flows and in communication with the inner portion of the fluid container, the outer conduit formed outside the inner conduit and defined by an outer surface of the inner conduit and an inner surface of the outer conduit, the fluid container being connectable to a container holder,
wherein the container holder includes a conduit capable of connecting with the inner conduit of the fluid container and another conduit capable of connecting with the outer conduit of the fluid container when the container holder receives the container connection and connects with the fluid container,
wherein the fluid container includes a connecting valve having a first engaging portion and a second engaging portion, the connecting valve being stored in the fluid container,
wherein the connecting valve comprises a guide portion to cause a movement of the connecting valve between a first position where the first engaging portion is engaged to the fluid container to close the outer conduit when the fluid container and the container holder are spaced apart from each other; and a second position where the second engaging portion and the container holder performs an engagement to fix the fluid container to the container holder and fluidly connect the conduit of the container holder to the inner conduit, and the another conduit of the container holder and the outer conduit are fluidly connected when the container holder receives the container connecting portion.

11. A fluid container according to claim 10, wherein the second engaging portion is a flexible arm having a protrusion and the container holder has a recess in the container holder; or the second engaging portion is a flexible arm having a recess and the container holder has a protrusion in the container holder,
wherein the engagement between the second engaging portion and the container holder is engagement between the protrusion and the recess.

12. A fluid container according to claim 10 or 11, wherein the first engaging portion is a tab disposed on the connecting valve, the fluid container includes a seat for holding the tab, and the first engaging portion is engaged with the first engaging portion by the fluid container by holding the tab onto the seat.

13. A fluid container according to claim 12, wherein the seat has a slope narrowing along a direction from the first position to the second position,
wherein the tab has a contact surface that contacts the slope when the container holder receives the container connection portion.

14. A fluid container of any one of claims 10 to 13,
wherein the connecting valve comprises an inner sliding surface,
wherein the guide portion is the outer surface of the inner conduit,
wherein the inner sliding surface of the connecting valve slides along the outer surface of the inner conduit so that the connecting valve performs the movement.

15. A fluid container of claim 14, wherein the connecting valve further comprises an outer sliding surface;
wherein the movement is caused by sliding of the outer surface sliding along the inner surface of the outer conduit.

16. A fluid container of any one of claims 10 to 13,
wherein the guide portion is an extension member extending along the inner conduit,
wherein the connecting valve engages the extension member,
wherein the connecting valve performs the movement along the extension member.

17. A fluid container according to any one of claims 10 to 16, wherein the movement between the first position and the second position is caused by the second engaging portion and the container holder;
wherein the movement between the first position and the second position is caused by the second engaging portion and the container holder.

18. A fluid container according to any one of claims 10 to 17,
wherein the fluid container includes a filter material for filtering the fluid within the fluid container, wherein the fluid container is a filter container.
